# EUROPEAN PATENT SPECIFICATION

(11) **EP 4 175 277 B1**
(45) Date of publication and mention of the grant of the patent: **09.12.2026**
(21) Application number: 21828596.3
(22) Date of filing: 21.06.2021
(51) Int. Cl.: H04N 23/00, H04M 1/02

(54) **IMAGE COLLECTION METHOD AND APPARATUS, AND ELECTRONIC DEVICE**
VERFAHREN UND VORRICHTUNG ZUR BILDERFASSUNG UND ELEKTRONISCHE VORRICHTUNG
PROCÉDÉ ET APPAREIL DE COLLECTE D'IMAGE, ET DISPOSITIF ÉLECTRONIQUE

(30) Priority: 24.06.2020 CN 202010589107
(43) Date of publication of application: 03.05.2023
(73) Proprietor: Vivo Mobile Communication Co., Ltd., Dongguan, Guangdong 523863 (CN)
(72) Inventor: DING, Song, Dongguan, Guangdong 523863 (CN)
(74) Representative: Lavoix
(86) International application number: PCT/CN2021/101162
(87) International publication number: WO 2021/259182

(56) References cited:
- CN-A- 101 266 394
- CN-A- 109 714 456
- CN-A- 109 714 456
- CN-A- 110 430 347
- CN-A- 110 707 417
- CN-A- 111 726 500
- CN-U- 208 128 326
- JP-A- 2002 196 203

## Description

### TECHNICAL FIELD

This application pertains to the technical field of electronic devices, and in particular to an image collection method and apparatus, and an electronic device.

### BACKGROUND

At present, functions of mobile phones are becoming increasingly powerful, and users have increasingly greater demands for photographing experience of mobile phones as well as previous calling and Internet functions. Therefore, due to high pixel requirements for cameras of current mobile phones, the cameras can meet increasingly higher requirements, and the mobile phones have developed from a single camera to multiple cameras, which brings more photography fun and fresh user experience, and has become a current development direction.

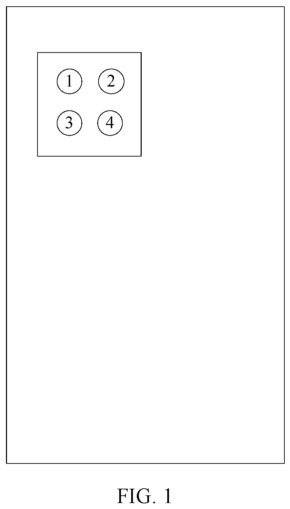

However, a user does not need all cameras eagerly while using a rear camera. The user uses a rear main camera and one of all cameras (such as a wide-angle camera) most commonly, but does not need other cameras eagerly. A current mobile phone is designed as shown in FIG. 1, in which an opening is disposed for each rear camera. In addition, a position of a camera decoration part protrudes from a back cover greatly and occupies a large area. Specifically, excessive openings disposed at positions of rear cameras and a large convex area of at the position of the camera decoration part will wholly affect structural strength of a housing, causing the housing to break or deform easily.

CN109714456A discloses electronic equipment and a shooting method of the electronic equipment. Electronic equipment comprises a middle frame, a rear cover, a first camera, a second camera and a third camera; the rear cover covers the middle frame so as to form a containing space, the rear cover is provided with a light-transmitting part; the first camera, the second camera and the third camera are arranged in the accommodating space; the first camera, the second camera and the third camera are movably connected to the middle frame and are opposite to or far away from the light-transmitting part; when the electronic equipment is switched to the first shooting mode, the photosensitive surface of the first camera and the photosensitive surface of the second camera are opposite to the light transmitting part, and when the electronic equipment is switched to the second shooting mode and the photosensitive surface of the second camera and the photosensitive surface of the third camera are opposite to the light transmitting part, and the first shooting mode is different from the second shooting mode. The electronic device is good in appearance consistency

CN110430347A discloses a camera module and a mobile terminal. The camera module comprises a guide bracket. A camera body comprises a camera bracket and at least one camera arranged on the camera bracket. The driving source is movably arranged on the guide bracket. The flexible circuit board is electrically connected with the driving source. One end of the screw rod is connected with the driving source. The other end of the screw rod is connected with the camera body. The screw rod is in threaded fit with the guide support. The driving source drives the screw rod to drive the camera body to move relative to the guide support in the axis direction of the screw rod and drive the camera body to rotate around the axis relative to the guide support. The driving source can drive the camera body to move and rotate through the screw rod, so that the camera can realize front shooting and also can realize rear shooting.

### SUMMARY

Embodiments of this application are intended to provide an image collection method and apparatus, and an electronic device, as defined in accompanying claims, which can resolve a problem that structural strength of a housing is affected by excessive openings at positions of cameras and a large convex area at a position of a camera decoration part.

In an embodiment of this application, by disposing a housing, where the housing is provided with a light transmission hole and an opening, the light transmission hole is disposed on a first side of the housing, the opening is disposed on a second side of the housing, and the first side and the second side are adjacent sides; a camera module disposed in the housing, where the camera module includes a first camera and a second camera; and a driving mechanism, connected to the camera module and configured to drive the camera module to move between a first position and a second position, where in a case that the camera module is located at the first position, the first camera faces the light transmission hole; and in a case that the camera module is located at the second position, the first camera at least partially extends out of the housing from the opening, and the second camera faces the light transmission hole, openings can be disposed for only some cameras, and the remaining cameras can be hidden in the housing. Therefore, openings at camera positions and a convex area of a camera decoration part can be reduced, structural strength of the housing can be increased, a possibility of breaking or deformation can be reduced, and a processing technology can be simplified.

### BRIEF DESCRIPTION OF DRAWINGS

FIG. 1 is a schematic structural diagram of an electronic device in the prior art;
FIG. 2 is a first schematic structural diagram of an electronic device according to an embodiment of this application;
FIG. 3 is a second schematic structural diagram of the electronic device according to an embodiment of this application;
FIG. 4 is a third schematic structural diagram of the electronic device according to an embodiment of this application;
FIG. 5 is a fourth schematic structural diagram of the electronic device according to an embodiment of this application;
FIG. 6 is a fifth schematic structural diagram of the electronic device according to an embodiment of this application;
FIG. 7 is a schematic flowchart of an image collection method according to an embodiment of this application;
FIG. 8 is a schematic structural diagram of an image collection apparatus according to an embodiment of this application; and
FIG. 9 is a sixth schematic structural diagram of the electronic device according to an embodiment of this application.

### DESCRIPTION OF EMBODIMENTS

The terms "first", "second", and the like in this specification and claims of this application are used to distinguish between similar objects instead of describing a specific order or sequence. It should be understood that the data used in such a way is interchangeable in proper circumstances so that the embodiments of this application can be implemented in an order other than the order illustrated or described herein. In addition, in the specification and the claims, "and/or" represents at least one of connected objects, and a character "/" generally represents an "or" relationship between associated objects.

The following specifically describes an image collection method and apparatus, and an electronic device provided in embodiments of this application through specific embodiments and application scenarios thereof with reference to the accompanying drawings.

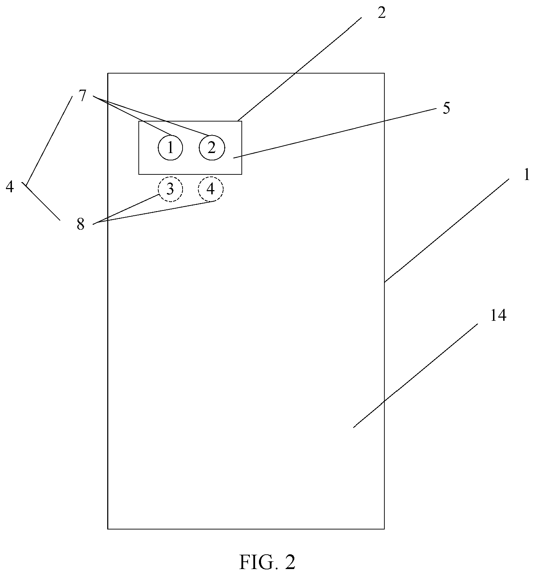

In view of the foregoing technical problem, this application provides an electronic device, as shown in FIG. 2 to FIG. 6, including:
a housing 1, where the housing 1 is provided with a light transmission hole 2 and an opening 3, the light transmission hole 2 is disposed on a first side of the housing 1, the opening 3 is disposed on a second side of the housing 1, and the first side and the second side are adjacent sides;
a camera module 4 disposed in the housing 1, where the camera module 4 includes a first camera 7 and a second camera 8;
a driving mechanism 6, connected to the camera module 4 and configured to drive the camera module 4 to move between a first position and a second position;
where in a case that the camera module 4 is located at the first position, the first camera 7 is opposite to the light transmission hole 2; and
in a case that the camera module 4 is located at the second position, the first camera 7 at least partially extends out of the housing 1 from the opening 3, and the second camera 8 is opposite to the light transmission hole 2.

The first camera 7 may include at least one camera, and the second camera 8 may also include at least one camera. The first camera may be a camera commonly used by a user.

By disposing the following for the electronic device provided in an embodiment of this application: a housing, where the housing is provided with a light transmission hole and an opening, the light transmission hole is disposed on a first side of the housing, the opening is disposed on a second side of the housing, and the first side and the second side are adjacent sides; a camera module disposed in the housing, where the camera module includes a first camera and a second camera; and a driving mechanism, connected to the camera module and configured to drive the camera module to move between a first position and a second position, where in a case that the camera module is located at the first position, the first camera is opposite to the light transmission hole; and in a case that the camera module is located at the second position, the first camera at least partially extends out of the housing from the opening, and the second camera is opposite to the light transmission hole, openings can be disposed for only some cameras (specifically, the foregoing light transmission hole is disposed, which is an action here, but does not refer to the opening 3), and the remaining cameras are hidden in the housing. Therefore, openings at camera positions and a convex area of a camera decoration part can be reduced, structural strength of the housing can be increased, a possibility of breaking or deformation can be reduced, and a processing technology can be simplified.

The first camera and the second camera can be disposed on a same base or different bases, and the following two examples are provided in this embodiment of this application.

In a first example, as shown in FIG. 2 to FIG. 6, the first camera 7 and the second camera 8 are disposed on a first base 12. The driving mechanism 6 drives the first base 12 to move along a first direction; where the first direction is a direction in which the first camera 7 extends out of the housing 1. This way, it can be ensured that the first camera and the second camera can be accurately controlled to move simultaneously.

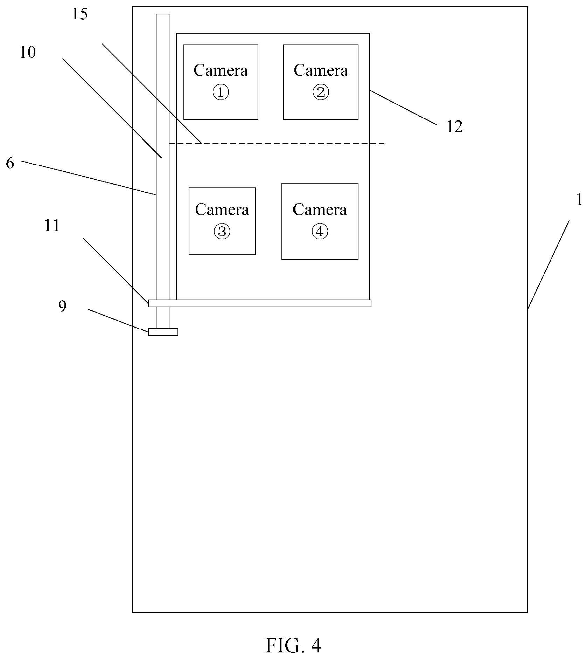

As shown in FIG. 4 to FIG. 6, the driving mechanism includes a motor 9, a screw threaded stud 10, and a nut 11. The motor 9 is fixedly connected to the screw threaded stud 10. The screw threaded stud 10 matches and is connected to the nut 11, and the nut 11 can move up and down relative to the screw threaded stud 10. The nut 11 is fixedly connected to the first base 12. This way, it can be ensured that the camera can move stably.

As shown in FIG. 4 to FIG. 6, the driving mechanism further includes a nut connection block 13. The nut 11 and the first base 12 are fixedly connected by the nut connection block 13. This way, connection strength between the nut and the first base can be further ensured.

In a second example (not shown in the figures), the first camera is disposed on a second base, the second camera is disposed on a third base, and the driving mechanism drives the second base and the third base to move. This way, the first camera and the second camera can be controlled to move over different distances.

Specifically, the driving mechanism drives the second base and the third base to move along a first direction simultaneously. The first direction is a direction in which the first camera extends out of the housing, and a distance that the second base moves along the first direction is greater than a distance that the third base moves along the first direction. This way, it can be ensured that the first camera extends out of the housing and the second camera is aligned with the light transmission hole.

The driving mechanism drives the second base to move along a first direction, and the driving mechanism drives the third base to move along a second direction. The first direction is a direction in which the first camera extends out of the housing, and the second direction is different from the first direction. This way, it can be ensure that movement of the camera can be controlled in more diversified manners.

Specifically, the driving mechanism includes a motor, a screw threaded stud, and at least two nuts. The motor is fixedly connected to the screw threaded stud. The screw threaded stud matches and is connected to the at least two nuts, and the at least two nuts can move up and down relative to the screw threaded stud. The second base and the third base are respectively fixedly connected to different nuts. This way, it can be ensured that the camera can move stably.

In this embodiment of this application, image collection parameters of the first camera and the second camera are different. For example, the first camera is a color camera configured to collect color images, and the second camera is a black-and-white camera; or the first camera is a wide-angle camera, and the second camera is a TOF camera. Parameters configured for the first camera and the second camera are different, and proper cameras can be flexibly selected according user's demands, to achieve more diversified photographing effects.

The electronic device provided in this embodiment of this application will be further explained below. For example, the camera module is a back camera module (that is, a rear camera module), and includes four cameras, which are divided into two groups (that is, the first camera and the second camera respectively include two cameras), and the first camera and the second camera are both disposed on the first base.

As shown in FIG. 2 to FIG. 6, an opening is disposed only for a commonly used camera (that is, the foregoing first camera 7) of the electronic device, and another camera (that is, the foregoing second camera 8) that is not commonly used is hidden under a rear cover (that is, in the foregoing housing 1), so that a light transmission hole 2 on the rear cover and an area of a camera decoration part 5 can be reduced. When the user needs to use the camera that is not commonly used, the user may wholly push the camera of the housing 1 in a telescopic manner, so that the camera hidden under the rear cover can be aligned with a position of an opening for the commonly used camera, and then multiple cameras can work simultaneously in a combined manner.

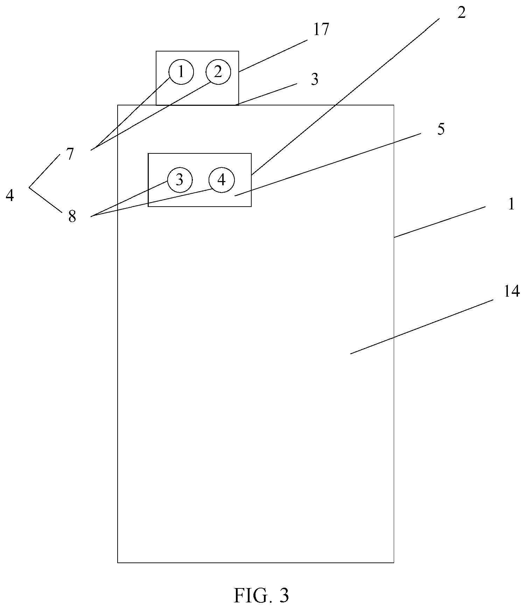

As shown in FIG. 2, a solution provided in an embodiment of this application includes four cameras, a camera ①, camera ②, camera ③, and camera ④. The camera ① and camera ② are commonly used cameras by the user. Their original states are below a camera decoration part 5. The two cameras are aligned with the light transmission hole 2 and form the foregoing first camera 7. The camera ③ and camera ④ are cameras that are not commonly used by the user and are under the rear cover of the electronic device in an original state, and form the foregoing second camera 8. Please see FIG. 2 for a back view of the complete device. A numeral 5 in the figures indicates the camera decoration part, and a numeral 14 indicates a back of the electronic device, which apply to FIG. 3 to FIG. 6. Through the structure provided in the embodiment of this application, an area of an opening at the rear cover can be reduced, structural performance can be enhanced, and aesthetic appearance can be improved.

In this solution, when the user needs to use the camera ③ and the camera ④, a telescopic camera principle can be adopted to push the camera ① and the camera ② out of the housing 1 through a mechanical structure (that is, the foregoing driving mechanism 6), and the camera ③ and the camera ④ are driven to positions at which the camera ① and the camera ② are originally located, so as to be aligned with the light transmission hole 2, and achieve combined photographing by multiple cameras, and a schematic diagram is shown in FIG. 3 (a camera holder 17 pops up in FIG. 3, so that the camera ① and the camera ② are outside the housing 1).

Details of a specific structure in this solution are as follows:
FIG. 4 is a front view of a structure in this solution, including the following key components: a motor (that is, the motor 9) at the bottom, configured to drive a screw threaded stud 10 to rotate; the screw threaded stud 10, which is a stud engraved with screw threads; a nut 11, which is a moving part, where the nut 11 cannot rotate with the screw threaded stud 10 (there is no space in a transverse direction), and can only move up and down with a direction of a thread when the motor 9 drives the screw threaded stud 10 to rotate; a module fixing block (that is, the first base 12), configured to connect the camera module 4 and fix a relative position of the camera module 4, and be fixed on the nut 11. A numeral 15 in the figure indicates a lower edge of the camera decoration part.

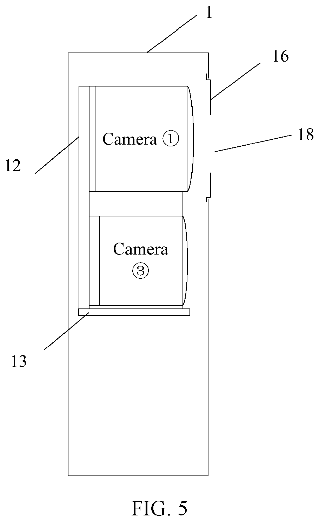

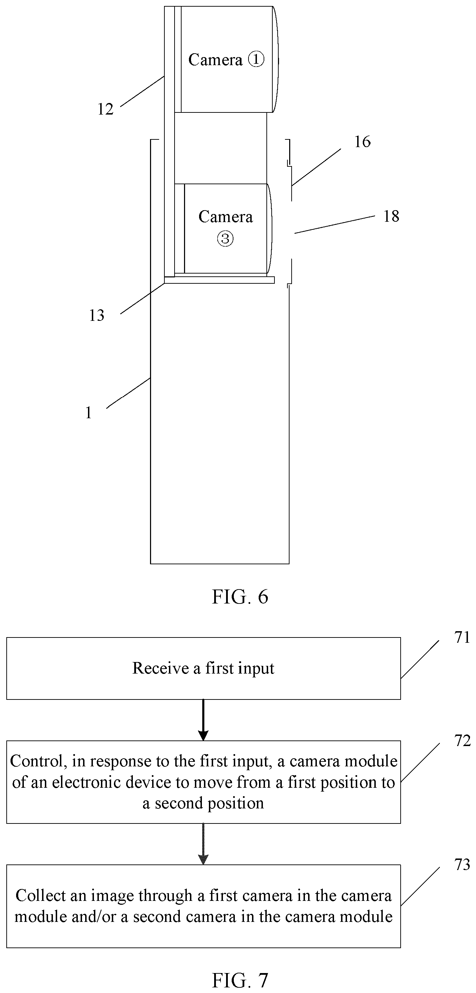

FIG. 5 and FIG. 6 are schematic cross-sectional views perpendicular to a direction of a display screen, which show a state of a camera module before and after extending and retracting. It can be seen that in a default state of the camera module, a camera ① (and a camera ②) are facing a light transmission hole 2 of a camera decoration part 5 on a rear cover. In this case, a camera ③ (and a camera ④) are inside the rear cover of the electronic device, the camera ③ (and the camera ④) cannot be seen from the outside. When a user uses the camera ① and the camera ② normally, the camera module is in an original state (that is, the camera module 4 is at a first position and the foregoing driving mechanism 6 is in a non-working state), and the camera is not required to be lifted. A numeral 16 in the figures indicates an upper edge of the camera decoration part, and a reference numeral 18 indicates an opening of the camera decoration part. In an embodiment of this application, when a camera collects an image, the camera is also aligned with the opening 18 of the camera decoration part, and the camera decoration 5 and the light transmission hole 2 on the housing 1 are mutually matched, so that the camera can collect an image normally.

When the user needs to use the camera ③ and the camera ④, the user can select a corresponding photographing function (such as blur or macro lens) through an upper switch of the electronic device, that is, determine an image obtaining parameter; In this case, the electronic device can control a motor 9 to push the camera out of the housing 1, so that the camera ③ and the camera ④ face the light transmission hole 2 of the camera decoration part 5, and cameras ①, ②, ③ and ④ can all perform imaging normally (that is, collect images separately), and a fusion function of multiple cameras can be achieved.

It can be known from the foregoing that, a solution provided in an embodiment of this application is as follows: through a principle of lifting a camera, an area of the camera decoration part and an opening for the camera can be better reduced, structural performance can be enhanced, and a better appearance can be achieved. In addition, a front camera is applied in this solution, so that a screen-to-body ratio of a front screen in a multi-front camera solution can be better increased.

Here, when the solution provided in this embodiment of this application is implemented, a type of cameras is not restricted to a rear camera, may be a front camera or another type of camera. The quantity of the cameras is also not restricted to four, may be less than or greater than four, which is not limited herein.

An embodiment of this application further provides an image collection method, applied to the foregoing electronic device. As shown in FIG. 7, the method includes:
Step 71: Receive a first input.

The first input may specifically be an input for indicating an image obtaining parameter, and the image obtaining parameter may include various parameters of an image type required by a user.

Step 72: Control, in response to the first input, a camera module of the electronic device, to move from a first position to a second position.

Specifically, the controlling, in response to the first input, a camera module of the electronic device, to move from a first position to a second position includes: determining a required camera in response to the first input; determining, according to a state of a driving mechanism of the electronic device, whether the required camera can collect an image; controlling, in a case that the image can be collected, the required camera to collect the image; and controlling, in a case that the image cannot be collected, the driving mechanism to drive the camera module to move from the first position to the second position. This way, it can be ensured that a required camera module can be exposed, and another unnecessary camera module can be still in a housing of the electronic device, without affecting image collection.

The required camera may include at least one of a camera commonly used by the user and a camera not commonly used by the user.

A state of a lifting mechanism may be: whether the lifting mechanism is in a working state and which working state the lifting mechanism is in. For a correspondence between the state of the lifting mechanism and a position of the camera module in the electronic device, one of the state and the position can be obtained according to the other.

More specifically, the determining, according to a state of a driving mechanism of the electronic device, whether the required camera can collect an image includes: determining, according to the state of the driving mechanism of the electronic device, whether the required camera is located outside the housing of the electronic device or aligned with a light transmission hole on the housing (and the light transmission hole can be used normally); and if yes, determining that the required camera can collect an image; if no, determining that the required camera cannot collect an image. This way, it can be directly and accurately determined that whether the required camera module can collect an image normally in a current state.

Step 73: Collect an image through a first camera in the camera module and/or a second camera in the camera module.

It can be known from the foregoing that in the image collection method provided in the embodiment of this application: receiving a first input; controlling, in response to the first input, a camera module of the electronic device to move from a first position to a second position; and collecting an image through a first camera in the camera module and/or a second camera in the camera module, it can be controlled that the required camera be in a state of being capable of collecting an image and another camera be not exposed and in the housing of the electronic device. Therefore, openings can be disposed for only some cameras, and the remaining cameras are hidden in the housing. Therefore, openings at camera positions and a convex area of the camera decoration part can be reduced, structural strength of the housing can be increased, a possibility of breaking or deformation can be reduced, and a processing technology can be simplified.

It should be noted that in the image collection method provided in the embodiment of this application, an executing body may be an image collection apparatus or a control module in the image collection apparatus for executing the image collection method. In an embodiment of this application, the image collection method provided in the embodiment of this application is described by using the image collection apparatus executing the image collection method as an example.

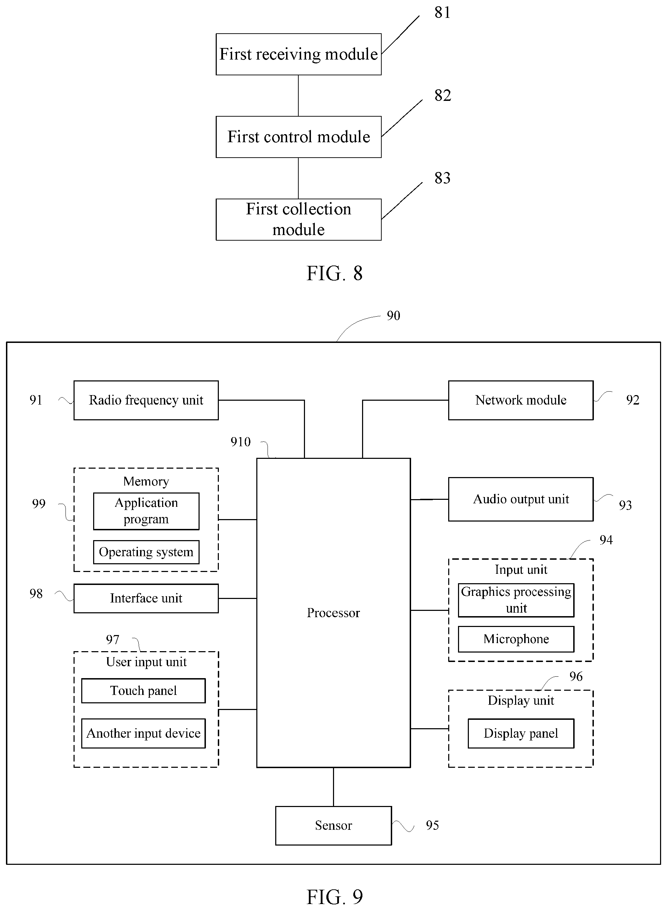

An embodiment of this application further provides an image collection apparatus, applied to the foregoing electronic device. As shown in FIG. 8, the apparatus includes:
a first receiving module 81, configured to receive a first input;
a first control module 82, configured to control, in response to the first input, a camera module of the electronic device to move from a first position to a second position; and
a first collection module 83, configured to collect an image through a first camera in the camera module and/or a second camera in the camera module.

Optionally, the first control module includes: a first determining sub-module, configured to determine a required camera in response to the first input; a second determining sub-module, configured to determine, according to a state of a driving mechanism of the electronic device, whether the required camera can collect an image; a first control sub-module, configured to control, in a case that the image can be collected, the required camera to collect the image; and a second control sub-module, configured to control, in a case that the image cannot be collected, the driving mechanism to drive the camera module to move from the first position to the second position. This way, it can be ensured that a required camera is exposed, and another unnecessary camera is still in a housing of the electronic device, without affecting image collection.

The image collection apparatus in this embodiment of this application may be an apparatus, or a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in the embodiments of this application.

The image collection apparatus in this embodiment of this application may be an apparatus with an operating system. The operating system may be an Android (Android) operating system, may be an iOS operating system, or may be another possible operating system, which is not specifically limited in the embodiments of the present application.

The image collection apparatus provided in this embodiment of this application can implement the processes implemented by the image collection apparatus in the method embodiment in FIG. 7. To avoid repetition, details are not described herein again.

For the image collection apparatus provided in the embodiment of this application, through the following: receiving the first input; controlling, in response to the first input, a camera module of the electronic device to move from a first position to a second position; and collecting an image through a first camera in the camera module and/or a second camera in the camera module, it can be controlled that the required camera be in a state of being capable of collecting an image and another camera be not exposed and in the housing of the electronic device. Therefore, openings can be disposed for only some cameras, and the remaining cameras are hidden in the housing. Therefore, openings at camera positions and a convex area of the camera decoration part can be reduced, structural strength of the housing can be increased, a possibility of breaking or deformation can be reduced, and a processing technology can be simplified.

An embodiment of this application further provides an electronic device. As shown in FIG. 9, the electronic device includes a processor 910, a memory 99, and a program or an instruction that is stored in the memory 99 and that can be run on the processor 910. When the program or the instruction is executed by the processor 910, the processes of the foregoing embodiments of the image collection method are implemented and a same technical effect can be achieved. To avoid repetition, details are not described herein again.

It should be noted that the electronic device in this embodiment of this application includes the foregoing mobile electronic device and the foregoing non-mobile electronic device.

FIG. 9 is a schematic structural diagram of an electronic device according to an embodiment of this application.

The electronic device 90 includes but is not limited to components such as a radio frequency unit 91, a network module 92, an audio output unit 93, an input unit 94, a sensor 95, a display unit 96, a user input unit 97, an interface unit 98, a memory 99, and a processor 910.

A person skilled in the art can understand that the electronic device 90 may further include a power supply (for example, a battery) that supplies power to the components. The power supply may be logically connected to the processor 910 by using a power management system, so as to implement functions such as charging management, discharging management, and power consumption management by using the power management system. The electronic device is not limited to the electronic device structure shown in FIG. 9. The electronic device may include more or fewer components than those shown in the figure, or combine some of the components, or arrange the components differently. Details are not described herein.

The processor 910 is configured to: receive a first input through the user input unit 97; controlling, in response to the first input, a camera module of the electronic device to move from a first position to a second position; and collecting an image through a first camera in the camera module and/or a second camera in the camera module.

In an embodiment of this application, through the following: receiving a first input; controlling, in response to the first input, a camera module of the electronic device to move from a first position to a second position; and collecting an image through a first camera in the camera module and/or a second camera in the camera module, it can be controlled that the required camera be in a state of being capable of collecting an image and another camera be not exposed and in the housing of the electronic device. Therefore, openings can be disposed for only some cameras, and the remaining cameras are hidden in the housing. Therefore, openings at camera positions and a convex area of the camera decoration part can be reduced, structural strength of the housing can be increased, a possibility of breaking or deformation can be reduced, and a processing technology can be simplified.

Optionally, the processor 910 is specifically configured to: determine a required camera in response to the first input; determining, according to a state of a driving mechanism of the electronic device, whether the required camera can collect an image; controlling, in a case that the image can be collected, the required camera to collect the image; and controlling, in a case that the image cannot be collected, the driving mechanism to drive the camera module to move from the first position to the second position.

This way, it can be ensured that a required camera is exposed, and another unnecessary camera is still in a housing of the electronic device, without affecting image collection.

An embodiment of this application further provides a readable storage medium, where the readable storage medium stores a program or an instruction, and when the program or the instruction is executed by a processor, the processes of the foregoing embodiments of the image collection are implemented, and a same technical effect can be achieved. To avoid repetition, details are not described herein again.

The processor is a processor in the electronic device in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communications interface, and the communications interface is coupled to the processor. The processor is configured to run a program or an instruction to implement various processes of the foregoing embodiments of the image collection method, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementation manners, a person skilled in the art may clearly understand that the method in the foregoing embodiment may be implemented by software in addition to a necessary universal hardware platform or by hardware only. In most circumstances, the former is a preferred implementation manner. Based on such understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in the embodiments of this application.

## Claims

1. An electronic device, comprising:
a housing (1), wherein the housing (1) is provided with a light transmission hole (2) and an opening (3), the light transmission hole (2) is disposed on a first side of the housing (1), the opening (3) is disposed on a second side of the housing (1), and the first side and the second side are adjacent sides;
a camera module (4) disposed in the housing (1), wherein the camera module (4) comprises a first camera (7) and a second camera (8); and
a driving mechanism (6), connected to the camera module (4) and configured to drive the camera module (4) to move between a first position and a second position,
wherein in a case that the camera module (4) is located at the first position, the first camera (7) faces the light transmission hole (2), and the second camera (8) is hidden in the housing (1); and
in a case that the camera module (4) is located at the second position, the first camera (7) at least partially extends out of the housing (1) from the opening (3), and the second camera (8) faces the light transmission hole (2).

2. The electronic device according to claim 1, wherein the first camera (7) and the second camera (8) are disposed on a first base (12); and the driving mechanism (6) drives the first base (12) to move along a first direction,
wherein the first direction is a direction in which the first camera (7) extends out of the housing (1).

3. The electronic device according to claim 2, wherein the driving mechanism (6) comprises a motor (9), a screw threaded stud (10), and a nut (11),
wherein the motor (9) is fixedly connected to the screw threaded stud (10), the screw threaded stud (10) matches and is connected to the nut (11), the nut (11) is capable of moving up and down relative to the screw threaded stud (10), and the nut (11) is fixedly connected to the first base (12).

4. The electronic device according to claim 1, wherein the first camera (7) is disposed on a second base, the second camera (8) is disposed on a third base, and the driving mechanism (6) drives the second base and the third base to move.

5. The electronic device according to claim 4, wherein the driving mechanism (6) drives the second base and the third base to move along a first direction simultaneously,
wherein the first direction is a direction in which the first camera (7) extends out of the housing (1), and a distance that the second base moves along the first direction is greater than a distance that the third base moves along the first direction.

6. The electronic device according to claim 4, wherein the driving mechanism (6) drives the second base to move along a first direction, and the driving mechanism (6) drives the third base to move along a second direction,
wherein the first direction is a direction in which the first camera (7) extends out of the housing (1), and the second direction is different from the first direction.

7. The electronic device according to claim 4, wherein the driving mechanism (6) comprises a motor (9), a screw threaded stud (10), and at least two nuts (11),
wherein the motor (9) is fixedly connected to the screw threaded stud (10); the screw threaded stud (10) matches and is connected to the at least two nuts (11), and the at least two nuts (11) are capable of moving up and down relative to the screw threaded stud (10); and the second base and the third base are respectively fixedly connected to different nuts (11).

8. The electronic device according to claim 1, wherein the image collection parameters of the first camera (7) and the second camera (8) are different.

9. An image collection method, applied to the electronic device according to any one of claims 1 to 8 and comprising:
receiving (71) a first input; and
controlling (72), in response to the first input, the
camera module of the electronic device to conditionally move from the first position to the second position in a case that an image is not capable of being collected; and
collecting (73) an image through the first camera in the camera module and/or the second camera in the camera module.

10. The image collection method according to claim 9, wherein the controlling (72), in response to the first input, a camera module of the electronic device to move from a first position to a second position comprises:
determining a required camera in response to the first input;
determining, according to a state of the driving mechanism of the electronic device, whether the required camera is capable of collecting an image;
controlling, in a case that the image is capable of being collected, the required camera to collect the image; and
controlling, in the case that the image is not capable of being collected, the driving mechanism to drive the camera module to move from the first position to the second position.

11. The electronic device according to any one of claims 1 to 8, further comprising an image collection apparatus comprising:
a first receiving module (81), configured to receive a first input;
a first control module (82), configured to control, in response to the first input, the camera module of the electronic device to move from a first position to a second position in a case that an image is not capable of being collected; and
a first collection module (83), configured to collect an image through the first camera in the camera module and/or the second camera in the camera module.

12. The electronic device according to claim 11, wherein the first control module (82) of the image collection apparatus comprises:
a first determining sub-module, configured to determine a required camera in response to the first input;
a second determining sub-module, configured to determine, according to a state of the driving mechanism of the electronic device, whether the required camera is capable of collecting an image;
a first control sub-module, configured to control, in a case that the image is capable of being collected, the required camera to collect the image; and
a second control sub-module, configured to control, in the case that the image is not capable of being collected, the driving mechanism to drive the camera module to move from the first position to the second position.

13. A computer-readable storage medium, storing a program or an instruction, wherein when the program or the instruction is executed by a processor, the steps of the image collection method according to any one of claims 9 and 10 are implemented.

## Patentansprüche

1. Eine elektronische Vorrichtung, umfassend:
ein Gehäuse (1), wobei das Gehäuse (1) mit einer Lichtdurchlassöffnung (2) und einer Öffnung (3) versehen ist, die Lichtdurchlassöffnung (2) auf einer ersten Seite des Gehäuses (1) angeordnet ist, die Öffnung (3) auf einer zweiten Seite des Gehäuses (1) angeordnet ist und die erste Seite und die zweite Seite benachbarte Seiten sind;
ein in dem Gehäuse (1) angeordnetes Kameramodul (4), wobei das Kameramodul (4) eine erste Kamera (7) und eine zweite Kamera (8) umfasst; und
einen Antriebsmechanismus (6), der mit dem Kameramodul (4) verbunden und dazu eingerichtet ist, das Kameramodul (4) anzutreiben, sich zwischen einer ersten Position und einer zweiten Position zu bewegen,
wobei in einem Fall, in dem sich das Kameramodul (4) in der ersten Position befindet, die erste Kamera (7) der Lichtdurchlassöffnung (2) zugewandt ist und die zweite Kamera (8) in dem Gehäuse (1) verborgen ist;
und
in einem Fall, in dem sich das Kameramodul (4) in der zweiten Position befindet, die erste Kamera (7) zumindest teilweise aus der Öffnung (3) aus dem Gehäuse (1) herausragt und die zweite Kamera (8) der Lichtdurchlassöffnung (2) zugewandt ist.

2. Die elektronische Vorrichtung nach Anspruch 1, wobei die erste Kamera (7) und die zweite Kamera (8) auf einer ersten Basis (12) angeordnet sind; und der Antriebsmechanismus (6) die erste Basis (12) antreibt, sich entlang einer ersten Richtung zu bewegen,
wobei die erste Richtung eine Richtung ist, in der die erste Kamera (7) aus dem Gehäuse (1) herausragt.

3. Die elektronische Vorrichtung nach Anspruch 2, wobei der Antriebsmechanismus (6) einen Motor (9), einen Gewindebolzen (10) und eine Mutter (11) umfasst,
wobei der Motor (9) fest mit dem Gewindebolzen (10) verbunden ist, der Gewindebolzen (10) mit der Mutter (11) zusammenpasst und mit ihr verbunden ist, die Mutter (11) relativ zu dem Gewindebolzen (10) auf und ab bewegbar ist und die Mutter (11) fest mit der ersten Basis (12) verbunden ist.

4. Die elektronische Vorrichtung nach Anspruch 1, wobei die erste Kamera (7) auf einer zweiten Basis angeordnet ist, die zweite Kamera (8) auf einer dritten Basis angeordnet ist und der Antriebsmechanismus (6) die zweite Basis und die dritte Basis antreibt, sich zu bewegen.

5. Die elektronische Vorrichtung nach Anspruch 4, wobei der Antriebsmechanismus (6) die zweite Basis und die dritte Basis antreibt, sich gleichzeitig entlang einer ersten Richtung zu bewegen,
wobei die erste Richtung eine Richtung ist, in der die erste Kamera (7) aus dem Gehäuse (1) herausragt, und eine Strecke, um die sich die zweite Basis entlang der ersten Richtung bewegt, größer ist als eine Strecke, um die sich die dritte Basis entlang der ersten Richtung bewegt.

6. Die elektronische Vorrichtung nach Anspruch 4, wobei der Antriebsmechanismus (6) die zweite Basis antreibt, sich entlang einer ersten Richtung zu bewegen, und der Antriebsmechanismus (6) die dritte Basis antreibt, sich entlang einer zweiten Richtung zu bewegen,
wobei die erste Richtung eine Richtung ist, in der die erste Kamera (7) aus dem Gehäuse (1) herausragt, und die zweite Richtung von der ersten Richtung verschieden ist.

7. Die elektronische Vorrichtung nach Anspruch 4, wobei der Antriebsmechanismus (6) einen Motor (9), einen Gewindebolzen (10) und mindestens zwei Muttern (11) umfasst,
wobei der Motor (9) fest mit dem Gewindebolzen (10) verbunden ist; der Gewindebolzen (10) mit den mindestens zwei Muttern (11) zusammenpasst und mit ihnen verbunden ist und die mindestens zwei Muttern (11) relativ zu dem Gewindebolzen (10) auf und ab bewegbar sind; und die zweite Basis und die dritte Basis jeweils fest mit unterschiedlichen Muttern (11) verbunden sind.

8. Die elektronische Vorrichtung nach Anspruch 1, wobei die Bilderfassungsparameter der ersten Kamera (7) und der zweiten Kamera (8) unterschiedlich sind.

9. Ein Bilderfassungsverfahren, angewendet auf die elektronische Vorrichtung nach einem der Ansprüche 1 bis 8 und umfassend:
Empfangen (71) einer ersten Eingabe; und
Steuern (72) des Kameramoduls der elektronischen Vorrichtung als Reaktion auf die erste Eingabe, um sich in einem Fall, in dem ein Bild nicht erfassbar ist, bedingt von der ersten Position in die zweite Position zu bewegen; und
Erfassen (73) eines Bildes durch die erste Kamera in dem Kameramodul und/oder die zweite Kamera in dem Kameramodul.

10. Das Bilderfassungsverfahren nach Anspruch 9, wobei das Steuern (72) eines Kameramoduls der elektronischen Vorrichtung als Reaktion auf die erste Eingabe, sich von einer ersten Position in eine zweite Position zu bewegen, umfasst:
Bestimmen einer erforderlichen Kamera als Reaktion auf die erste Eingabe;
Bestimmen gemäß einem Zustand des Antriebsmechanismus der elektronischen Vorrichtung, ob die erforderliche Kamera ein Bild erfassen kann;
Steuern der erforderlichen Kamera in einem Fall, in dem das Bild erfassbar ist, um das Bild zu erfassen; und
Steuern des Antriebsmechanismus in dem Fall, in dem das Bild nicht erfassbar ist, um das Kameramodul anzutreiben, sich von der ersten Position in die zweite Position zu bewegen.

11. Die elektronische Vorrichtung nach einem der Ansprüche 1 bis 8, ferner umfassend eine Bilderfassungsvorrichtung, umfassend:
ein erstes Empfangsmodul (81), das dazu eingerichtet ist, eine erste Eingabe zu empfangen;
ein erstes Steuerungsmodul (82), konfiguriert, als Reaktion auf die erste Eingabe das Kameramodul der elektronischen Vorrichtung so zu steuern, dass es sich in einem Fall, in dem ein Bild nicht erfassbar ist, von einer ersten Position zu einer zweiten Position bewegt; und
ein erstes Erfassungsmodul (83), konfiguriert, durch die erste Kamera in dem Kameramodul und/oder die zweite Kamera in dem Kameramodul ein Bild zu erfassen.

12. Die elektronische Vorrichtung nach Anspruch 11, wobei das erste Steuerungsmodul (82) der Bilderfassungsvorrichtung umfasst:
ein erstes Bestimmungsuntermodul, konfiguriert, als Reaktion auf die erste Eingabe eine erforderliche Kamera zu bestimmen;
ein zweites Bestimmungsuntermodul, konfiguriert, anhand eines Zustands des Antriebsmechanismus der elektronischen Vorrichtung zu bestimmen, ob die erforderliche Kamera ein Bild erfassen kann;
ein erstes Steuerungsuntermodul, konfiguriert, in einem Fall, in dem das Bild erfassbar ist, die erforderliche Kamera so zu steuern, dass sie das Bild erfasst; und
ein zweites Steuerungsuntermodul, konfiguriert, in dem Fall, in dem das Bild nicht erfassbar ist, den Antriebsmechanismus so zu steuern, dass er das Kameramodul antreibt, sich von der ersten Position zu der zweiten Position zu bewegen.

13. Ein computerlesbares Speichermedium, das ein Programm oder eine Weisung speichert, wobei, wenn das Programm oder die Weisung durch einen Prozessor ausgeführt wird, die Schritte des Bilderfassungsverfahrens nach einem beliebigen der Ansprüche 9 und 10 implementiert werden.

## Revendications

1. Un dispositif électronique, comprenant :
un boîtier (1), dans lequel le boîtier (1) est pourvu d'un trou de transmission de lumière (2) et d'une ouverture (3), le trou de transmission de lumière (2) est disposé sur un premier côté du boîtier (1), l'ouverture (3) est disposée sur un deuxième côté du boîtier (1), et le premier côté et le deuxième côté sont des côtés adjacents ;
un module de caméra (4) disposé dans le boîtier (1), dans lequel le module de caméra (4) comprend une première caméra (7) et une deuxième caméra (8) ; et
un mécanisme d'entraînement (6), relié au module de caméra (4) et configuré pour entraîner le module de caméra (4) à se déplacer entre une première position et une deuxième position,
dans lequel, dans le cas où le module de caméra (4) est situé à la première position, la première caméra (7) fait face au trou de transmission de lumière (2), et la deuxième caméra (8) est cachée dans le boîtier (1) ;
et
dans le cas où le module de caméra (4) est situé à la deuxième position, la première caméra (7) s'étend au moins partiellement hors du boîtier (1) par l'ouverture (3), et la deuxième caméra (8) fait face au trou de transmission de lumière (2).

2. Le dispositif électronique selon la revendication 1, dans lequel la première caméra (7) et la deuxième caméra (8) sont disposées sur une première base (12) ; et le mécanisme d'entraînement (6) entraîne la première base (12) à se déplacer selon une première direction,
dans lequel la première direction est une direction dans laquelle la première caméra (7) s'étend hors du boîtier (1).

3. Le dispositif électronique selon la revendication 2, dans lequel le mécanisme d'entraînement (6) comprend un moteur (9), un goujon fileté (10) et un écrou (11),
dans lequel le moteur (9) est relié de manière fixe au goujon fileté (10), le goujon fileté (10) s'ajuste à l'écrou (11) et est relié à celui-ci, l'écrou (11) est susceptible de se déplacer vers le haut et vers le bas par rapport au goujon fileté (10), et l'écrou (11) est relié de manière fixe à la première base (12).

4. Le dispositif électronique selon la revendication 1, dans lequel la première caméra (7) est disposée sur une deuxième base, la deuxième caméra (8) est disposée sur une troisième base, et le mécanisme d'entraînement (6) entraîne la deuxième base et la troisième base à se déplacer.

5. Le dispositif électronique selon la revendication 4, dans lequel le mécanisme d'entraînement (6) entraîne la deuxième base et la troisième base à se déplacer selon une première direction simultanément,
dans lequel la première direction est une direction dans laquelle la première caméra (7) s'étend hors du boîtier (1), et une distance sur laquelle la deuxième base se déplace selon la première direction est supérieure à une distance sur laquelle la troisième base se déplace selon la première direction.

6. Le dispositif électronique selon la revendication 4, dans lequel le mécanisme d'entraînement (6) entraîne la deuxième base à se déplacer selon une première direction, et le mécanisme d'entraînement (6) entraîne la troisième base à se déplacer selon une deuxième direction,
dans lequel la première direction est une direction dans laquelle la première caméra (7) s'étend hors du boîtier (1), et la deuxième direction est différente de la première direction.

7. Le dispositif électronique selon la revendication 4, dans lequel le mécanisme d'entraînement (6) comprend un moteur (9), un goujon fileté (10) et au moins deux écrous (11),
dans lequel le moteur (9) est relié de manière fixe au goujon fileté (10) ; le goujon fileté (10) s'ajuste aux au moins deux écrous (11) et est relié à ceux-ci, et les au moins deux écrous (11) sont susceptibles de se déplacer vers le haut et vers le bas par rapport au goujon fileté (10) ; et la deuxième base et la troisième base sont respectivement reliées de manière fixe à des écrous (11) différents.

8. Le dispositif électronique selon la revendication 1, dans lequel les paramètres d'acquisition d'images de la première caméra (7) et de la deuxième caméra (8) sont différents.

9. Un procédé d'acquisition d'images, appliqué au dispositif électronique selon l'une quelconque des revendications 1 à 8 et comprenant :
la réception (71) d'une première entrée ; et
la commande (72), en réponse à la première entrée, du module de caméra du dispositif électronique pour qu'il se déplace conditionnellement de la première position à la deuxième position dans le cas où une image n'est pas susceptible d'être acquise ; et
l'acquisition (73) d'une image par la première caméra dans le module de caméra et/ou la deuxième caméra dans le module de caméra.

10. Le procédé d'acquisition d'images selon la revendication 9, dans lequel la commande (72), en réponse à la première entrée, d'un module de caméra du dispositif électronique pour qu'il se déplace d'une première position à une deuxième position comprend :
la détermination d'une caméra requise en réponse à la première entrée ;
la détermination, selon un état du mécanisme d'entraînement du dispositif électronique, du fait que la caméra requise est susceptible d'acquérir une image ou non ;
la commande, dans le cas où l'image est susceptible d'être acquise, de la caméra requise pour acquérir l'image ; et
la commande, dans le cas où l'image n'est pas susceptible d'être acquise, du mécanisme d'entraînement pour entraîner le module de caméra à se déplacer de la première position à la deuxième position.

11. Le dispositif électronique selon l'une quelconque des revendications 1 à 8, comprenant en outre un appareil d'acquisition d'images comprenant :
un premier module de réception (81), configuré pour recevoir une première entrée ;
un premier module de commande (82), configuré pour commander, en réponse à la première entrée, le déplacement du module de caméra du dispositif électronique d'une première position à une deuxième position dans le cas où une image n'est pas susceptible d'être acquise ; et
un premier module d'acquisition (83), configuré pour acquérir une image au moyen de la première caméra dans le module de caméra et/ou de la deuxième caméra dans le module de caméra.

12. Le dispositif électronique selon la revendication 11, dans lequel le premier module de commande (82) de l'appareil d'acquisition d'images comprend :
un premier sous-module de détermination, configuré pour déterminer une caméra requise en réponse à la première entrée ;
un deuxième sous-module de détermination, configuré pour déterminer, selon un état du mécanisme d'entraînement du dispositif électronique, si la caméra requise est capable d'acquérir une image ;
un premier sous-module de commande, configuré pour commander, dans le cas où l'image est susceptible d'être acquise, à la caméra requise d'acquérir l'image ; et
un deuxième sous-module de commande, configuré pour commander, dans le cas où l'image n'est pas susceptible d'être acquise, au mécanisme d'entraînement d'entraîner le module de caméra pour qu'il se déplace de la première position à la deuxième position.

13. Un support de stockage lisible par ordinateur, stockant un programme ou une instruction, dans lequel, lorsque le programme ou l'instruction est exécuté par un processeur, les étapes du procédé d'acquisition d'images selon l'une quelconque des revendications 9 et 10 sont mises en œuvre.
